# EUROPÄISCHE PATENTSCHRIFT

(11) **EP 2 568 207 B1**
(45) Veröffentlichungstag und Bekanntmachung des Hinweises auf die Patenterteilung: **29.08.2018**
(21) Anmeldenummer: 12175284.4
(22) Anmeldetag: 06.07.2012
(51) Int. Cl.: F16L 19/065

(54) **Rohrverbinder**
Pipe connector
Raccordement de tuyau

(30) Priorität: 01.08.2011 DE 202011103941 U
(43) Veröffentlichungstag der Anmeldung: 13.03.2013
(73) Patentinhaber: TECE GmbH, 48282 Emsdetten (DE)
(72) Erfinder: Beike, Christian, 48282 Emsdetten (DE); Van Goer, Jens, 48607 Ochtrup (DE)
(74) Vertreter: Lippert Stachow Patentanwälte Rechtsanwälte

(56) Entgegenhaltungen:
- EP-A2- 2 129 955
- DE-A1- 4 220 814
- DE-B3-102005 011 958
- DE-C1- 10 110 356

## Beschreibung

Die Erfindung betrifft einen Rohrverbinder mit zwei Anschlussendbereichen, einem ersten Anschlussendbereich mit einem Anschlussstutzen, der mittels eines Schraubelementes in einer Schraubverbindung an einem Rohranschluss, Verteiler oder dergleichen festlegbar ist, und einem als Steckverbinder ausgebildeten zweiten Anschlussendbereich, wobei der Rohrverbinder ein einstückig ausgebildetes Fixierteil zur Befestigung eines Rohrleitungsendes umfasst und wobei der zweite Anschlussendbereich einen Stützkörper, ein Fixierteil zur Befestigung eines Rohrleitungsendes und ein zwischen Fixierteil und Stützkörper angeordnetes Klemmelement aufweist, das relativ zum Fixierteil in einer Klemmrichtung zu einem von dem ersten Anschlussendbereich weg weisenden freien Ende des Fixierteils hin axial bewegbar ist und infolge dieser Bewegung ein radial nach innen weisender Wandbereich des Klemmelementes gegen die Außenseite des Rohrleitungsendes pressbar ist.

In der DE 10 2005 011 958 B3 ist ein Rohrverbinder mit einer Klemmverschraubung offenbart. Der Rohrverbinder umfasst eine Stützhülse, auf die eine Rohrleitung aufschiebbar ist, sowie eine Überwurfmutter und ein zwischen Überwurfmutter und Stützhülse vorgesehenes Klemmelement, das bei dem Aufschrauben der Überwurfmutter auf einen Rohranschluss durch die Überwurfmutter radial gegen die Stützhülse gepresst wird. In der DE 101 10 356 C1 ist ein Rohrverbinder mit einer Klemmverschraubung offenbart, der eine Stützhülse aufweist, auf die eine Rohrleitung aufschiebbar ist, sowie eine Überwurfmutter und eine zwischen Überwurfmutter und Stützhülse vorgesehene Klemmanordnung, die bei dem Aufschrauben der Überwurfmutter auf eine Aufnahmehülse durch die Überwurfmutter einen Anpressdruck radial zur Stützhülse ausübt. Die Aufnahmehülse ist dazu ausgebildet, an einen Rohranschluss angeschlossen zu werden. In DE 42 20 814 A1 ist ein Rohrverbinder mit einer Stützhülse offenbart, auf die eine Rohrleitung aufschiebbar ist. Der Rohrverbinder umfasst ferner eine Überwurfmutter, eine Halteanordnung und eine Dichtungsanordnung. Über die Dichtungsanordnung wird bei dem Aufschrauben der Rohrverbindung auf einen Rohranschluss eine auf die Stützhülse aufgeschobene Rohrleitung gegen die Überwurfmutter, den Stützkörper und den Rohranschluss abgedichtet, und durch die Halteanordnung wird die Rohrleitung an der Stützhülse gehalten.

Ein gattungsgemäßer Rohrverbinder wird beispielsweise eingesetzt, um Leitungsrohre, beispielsweise einer Heizungsanlage an Verteilern oder Heizkörpern anzuschließen. Hierzu wird der Rohrverbinder in einer Vormontage mit seinem ersten Anschlussendbereich an dem Verteiler oder dem Heizkörper, beispielsweise mittels einer Überwurfmutter als Schraubelement verschraubt und das anzuschließende Rohrende in den zweiten Anschlussendbereich in einen Aufnahmeraum hinein eingesteckt und verspannt bzw. festgeklemmt. Das Klemmteil wird plastisch nicht verformt. Der Aufnahmeraum wird radial außen von dem Klemmelement und radial innen von dem Stützkörper begrenzt. Das eingesteckte Leitungsende wird unter geringer axialer Bewegung in Klemmrichtung mittels des Klemmstückes gegen das Fixierteil und den Stützkörper verspannt. Damit ist eine einfache Montage des Rohrleitungsendes an den Rohrverbinder möglich. Da hier zwei Verbindungsformen, eine Schraubverbindung in dem ersten Anschlussendbereich und eine Steck-Klemmverbindung in dem zweiten Anschlussendbereich, vorgesehen sind, ist ein derartiger Rohrverbinder komplex aufgebaut und weist eine relativ große Bauhöhe auf, welche in der Praxis hinderlich sein kann. Häufig sind in der Praxis die Anschlüsse bzw. Verteiler beispielsweise einer Heizungsanlage an schwer zugänglichen Stellen, so dass eine Verschraubung des Rohrverbinders mittels eines Schraubschlüssels umständlich und schwierig ist.

In der EP 2 129 955 A2 wird ein Steckverbinder mit beidseitiger Steck-Klemmverbindung beschrieben. In der DE 10 2007 050 955 B4 wird ein Rohrverbinder mit einem als Eurokonusanschluss ausgebildeten Anschlussstutzen und einer Überwurfmutter zum Gewindeeingriff an den Rohranschluss oder Verteiler offenbart. In der DE 10 2004 010 603 B4 wird ein Rohrverbinder ebenfalls mit einem Eurokonusanschluss für Rohranschluss oder Verteiler beschrieben. Zudem wird hier eine Steck-Quetsch-Verbindung mit dem Rohrleitungsende offenbart, in der ein Klemmring unter Anlage an dem Rohrleitungsende bei Überschrauben der Überwurfmutter mittels derselben plastisch verformt wird.

Aufgabe der Erfindung ist, einen gattungsgemäßen Rohrverbinder bereitzustellen, der weniger komplex aufgebaut und einfacher montierbar ist. Ferner soll er einfacher einbaubar sein.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass das Fixierteil gegen Klemmrichtung über den Stützkörper aufschiebbar ist, wobei an dem Stützkörper ein Anschlag vorgesehen ist, gegen den das Fixierteil mit einem entsprechenden Anschlag gegen Klemmrichtung in eine Verbindungsposition hinein axial führbar ist, wobei das Fixierteil in der Verbindungsposition den Rohrverbinder gegen Klemmrichtung axial übergreift und mit einem Endbereich in den ersten Anschlussendbereich hinein ragt, wobei der Endbereich das Schraubelement aufweist oder als dasselbe ausgebildet ist und wobei in der Verbindungsposition das Fixierteil mit seinem Endbereich zum Gewindeeingriff in ein am Rohranschluss, Verteiler oder dergleichen vorgesehenes Gewinde gegen Klemmrichtung vorsteht und der Rohrverbinder mit dem Anschlussstutzen an dem Rohranschluss, Verteiler oder dergleichen axial anlegbar und mit Aufschrauben des Fixierteils an demselben festlegbar und hierbei der Stützkörper zwischen demselben und dem Anschlag des Fixierteils einklemmbar ist, wobei der zweite Anschlussendbereich als Steckverbinder ausgebildet ist, in den nach dem Festlegen des Rohrverbinders an dem Rohranschluss, Verteiler oder dergleichen das Rohrleitungsende einsteckbar ist, wobei in Klemmrichtung (k) axial vor dem Klemmelement (8) ein Krallelement (12) vorgesehen ist, das radial innen eine Kralle (13) zum Eingriff in oder Anpressen an die Außenseite des Rohrleitungsendes aufweist und das einstückig mit dem Klemmelement (8) verbunden ist, wobei das Fixierteil (7), der Stützkörper (6), das Klemmelement (8) und das Krallelement (12) aus Kunststoff hergestellt sind.

Es wird vorgeschlagen, das Fixierteil gegen Klemmrichtung in den ersten Anschlussendbereich hinein zu verlängern. Indem das Fixierteil mit einem Endbereich in den ersten Anschlussendbereich hinein ragt und der Endbereich das Schraubelement aufweist bzw. als dasselbe ausgebildet ist, kann ein zusätzliches Bauteil, das gemäß dem Stand der Technik in Form einer Überwurfmutter ausgebildet sein kann, eingespart werden. Damit wird der Aufbau des Rohrverbinders und dessen Montage vereinfacht werden. Ferner ist der Rohrverbinder in Verbindungsposition mittels des Fixierteils über seine axiale Länge nach Außen hin geschützt.

Als Stand der Technik zur Ausbildung des Steckverbinders ist bereits die EP 2 129 955 A2 genannt, wobei hier das Fixierteil in dem zweiten Anschlussendbereich durch Verschraubung an dem Stützkörper lagerfixiert ist. Entsprechend sind bei dem üblichen Rohrverbinder notwendig ein Abschnitt des Stützkörpers zur Lagefixierung des Fixierteiles mit Außengewinde und Anschlag sowie ein axialer Bewegungsraum für die Überwurfmutter vorgesehen, der bei dem erfindungsgemäßen Rohrverbinder entfallen kann. Dadurch hat der Rohrverbinder einen wesentlich kompakteren Aufbau mit einer verkürzten axialen Länge. Diese Verkürzung kann gegenüber der axialen Länge des Rohrverbinders gemäß dem Stand der Technik mindestens ein Viertel, vorzugsweise mindestens ein Drittel bis die Hälfte, betragen.

So kann auch das Fixierteil gegen Klemmrichtung über den Stützkörper aufgeschoben werden. Zur axialen Begrenzung eines Weges des Fixierteiles gegen Klemmrichtung über den Stützkörper ist an demselben ein Anschlag vorgesehen, gegen den das Fixierteil mit einem entsprechenden Anschlag gegen Klemmrichtung in eine Verbindungsposition hinein axial führbar ist. In der Verbindungsposition steht das Fixierteil mit seinem Endbereich zum Gewindeeingriff in ein am Rohranschluss, Verteiler oder dergleichen vorgesehenes Gewinde gegen Klemmrichtung axial vor bzw.greift in dasselbe ein. Somit kann das Fixierteil unter Gewindeeingriff an dem Außengewinde des Rohranschlusses oder Verteilers an demselben lagefixiert werden. Hierbei ist der Gewindeeingriff zweckmäßig von Fixierteil und Rohranschluss bzw. Verteiler so dimensioniert, dass der Stützkörper mit Anschlag des Fixierteiles gegen seinen Anschlag zwischen Anschlag und Rohranschluss bzw. Verteiler eingeklemmt bzw. festgesetzt wird. Damit kann das Fixierteil in seinem Endbereich vollständig die Funktion einer Überwurfmutter erfüllen. Der Endbereich des Fixierteiles ist somit überwurfmutterartig ausgebildet.

Der Rohrverbinder kann mit dem Anschlussstutzen an dem Rohranschluss bzw. an dem Verteiler axial anliegen. Somit kann der Rohrverbinder mit Aufschrauben des Fixierteiles an dem Rohranschluss oder Verteiler an demselben festgelegt werden. In einem weiteren Arbeitsschritt muss lediglich das Rohrleitungsende in den Steckverbinder eingesteckt werden. Der Mechanismus des Steckverbinders an sich mit Einstecken und Festhalten des Rohrleitungsendes in dem Steckverbinder ist in der EP 2 129 955 A2 beschrieben, wobei deren Offenbarungsgehalt insbesondere bezüglich dieses Mechanismus in dieser Anmeldung ausdrücklich mit aufgenommen wird.

Der Endbereich des Fixierteiles weist zur Ausbildung des Schraubelementes ein Innengewinde zum Gewindeeingriff an den Rohranschluss, Verteiler oder dergleichen auf. Das Fixierteil ist vorzugsweise hülsenartig ausgebildet. Damit kann das Fixierteil eine Schraubhülse sein. Somit kann zur Erleichterung des Einbaues des Rohrverbinders und dessen Montage, die gesamte radiale Außenseite des Fixierteiles zum Einleiten eines Drehemomentes zum Festdrehen des Fixierteiles an dem Rohranschluss bzw. dem Verteiler genutzt werden.

Obwohl das Fixierteil des Rohrverbinders zugleich das Schraubelement ausbildet, ist das Fixierteil nicht komplexer als das Fixierteil gemäß dem Stand der Technik ausgebildet, da das Fixierteil des erfindungsgemäßen Rohrverbinders wie das Fixierteil des Rohrverbinders gemäß dem Stand der Technik ebenfalls lediglich ein Innengewinde und einen Anschlag aufweisen muss, wobei, wie oben beschrieben, das Fixierteil des erfindungsgemäßen Rohrverbinders jedoch mit seinem Endbereich in den ersten Anschlussendbereich hineinragt. Vorzugsweise ist das Fixierteil einstückig ausgebildet.

Der Anschlag zur Wegbegrenzung des Fixierteiles gegen Klemmrichtung kann zweckmäßigerweise zwischen den Anschlussbreichen angeordnet sein. Die axiale Länge des Rohrverbinders kann weiter minimiert werden, indem die beiden Anschlussendbereiche vorzugsweise unmittelbar aneinander angrenzen. Hierbei können der Anschlag an dem Fixierteil wie der dazugehörige Anschlag an dem Stützkörper die Grenze zwischen den Anschlussendbereichen bilden. Damit wird zugleich der Aufbau des Rohrverbinders und dessen Einbau weiter vereinfacht.

In Klemmrichtung ist axial vor dem Klemmelement ein Krallelement vorgesehen. Das Krallelement kann radial in eine Kralle zum Eingriff in oder zum Anpressen an die Außenseite der Rohrleitung aufweisen. Vorzugsweise ist das Krallelement einstückig mit dem Klemmelement derart verbunden, dass bei radial einwärts gerichteter Bewegung des nach innen weisenden Wandbereiches des Klemmelementes keine oder nur eine zu vernachlässigende radiale Kraft auf die Kralle des Krallelementes ausübbar ist. Damit wird gewährleistet, dass es beim Einschieben des Rohrleitungsendes sowie beim Festhalten derselben in dem Steckverbinder zu keiner oder nur unerheblichen Schädigung des Krallelementes selbst und der Rohrleitungsoberfläche kommt. Damit können Krallelement und das damit verbundene Klemmelement sowie das Rohleitungsende auch nach mehrfachem Lösen der Steckverbindung problemlos wiederverwendet bzw. an anderer Stelle eingesetzt werden.

Der Rohrverbinder ist somit sehr einfach aufgebaut mit wenigen Bauteilen, dem Fixierteil, dem Stützkörper und dem Klemmelement. Das Klemmelement ist zugleich einstückig mit einem zusätzlich vorgesehen Krallelement verbunden. Diese Bauteile sind, vorzugsweise im Spritzgussverfahren, aus einem Kunststoff, insbesondere aus einem Hochleistungskunststoff, hergestellt. Dieser Hochleistungskunststoff kann beispielsweise Polysulfon (PSU), Polyestersulfon (PESU) oder Polyphenylsulfon (PPSU) sein, wobei PPSU insbesondere wegen seiner erhöhten Kerbschlagzähigkeit besonders bevorzugt ist.

In den beiden Anschlussendbereichen des Rohrverbinders kann jeweils ein Dichtungselement zur Abdichtung des jeweils vorgesehenen Rohranschlusses, Verteilers oder dergleichen bzw. des Rohrleitungsendes jeweils gegen den Stützkörper vorgesehen sein. Dieses Dichtungselement ist vorzugsweise als O-Ring ausgebildet. Dieser kann beidendseitig an dem Stützkörper jeweils in einer radial nach außen geöffneten Ringnut angeordnet sein.

Der Anschlussstutzen kann in üblicherweise als Konusanschluss oder als Flachdichtungsanschluss ausgebildet sein. Besonders bevorzugt ist eine Ausbildung des Konusanschlusses als Eurokonusanschluss, wie er beispielsweise in der DE 10 2004 010 603 B4 und der DE 10 2007 050 955 B4 beschrieben ist, deren Offenbarungsgehalt hinsichtlich der Ausbildung des Eurokonus in den Offenbarungsgehalt dieser Anmeldung einbezogen wird.

Insbesondere kann der Eurokonusanschluss gegen Klemmrichtung endseitig des Stützkörpers eine zylindrische Aufnahme mit einem in Klemmrichtung angrenzenden Außenkonus aufweisen. Endseitig kann der Rohranschluss oder Verteiler ein rohrartiges Anschlussende mit einem Innenkonus aufweisen. Zur Verbindung kann das Anschlussende des Rohranschlusses oder Verteilers auf die zylindrische Aufnahme aufgeschoben werden, bis die beiden Konen, der Innenkonus des Verteilers und der Außenkonus des Stützkörpers, gleich einem Anschlag zur Anlage kommen und mit Verschraubung des Fixierteiles an dem Rohranschluss oder Verteilers gegeneinander gepresst werden.

Die vorliegende Zeichnung wird im Folgenden anhand einer in einer Zeichnung dargestellten Ausführungsform des Rohrverbinders näher erläutert. Zur Verdeutlichung der Erfindung wird ebenfalls ein üblicher Rohrverbinder in der Zeichnung dargestellt. Die Zeichnung zeigen jeweils mit Darstellung eines Rohrleitungsendes:
- Fig. 1:: eine perspektivische Seitenansicht eines Rohrverbinders nach Stand der Technik,
- Fig. 2:: eine Explosionsdarstellung des Rohrverbinders gemäß Fig. 1,
- Fig. 3:: eine Längsschnittansicht des Rohrverbinders gemäß Figur 1
- Fig. 4:: eine Längsschnittansicht des Rohrverbinders gemäß Fig. 2,
- Fig. 5:: eine perspektivische Seitenansicht eines erfindungsgemäßen Rohrverbinders,
- Fig. 6:: eine Explosionsdarstellung des erfindungsgemäßen Rohrverbinders gemäß Fig. 5,
- Fig. 7:: eine Längsschnittdarstellung des erfindungsgemäßen Rohrverbinders gemäß Fig. 5 und
- Fig. 8:: eine Längsschnittdarstellung des in Explosionsdarstellung gezeigten erfindungsgemäßen Rohrverbinders gemäß Fig. 7.

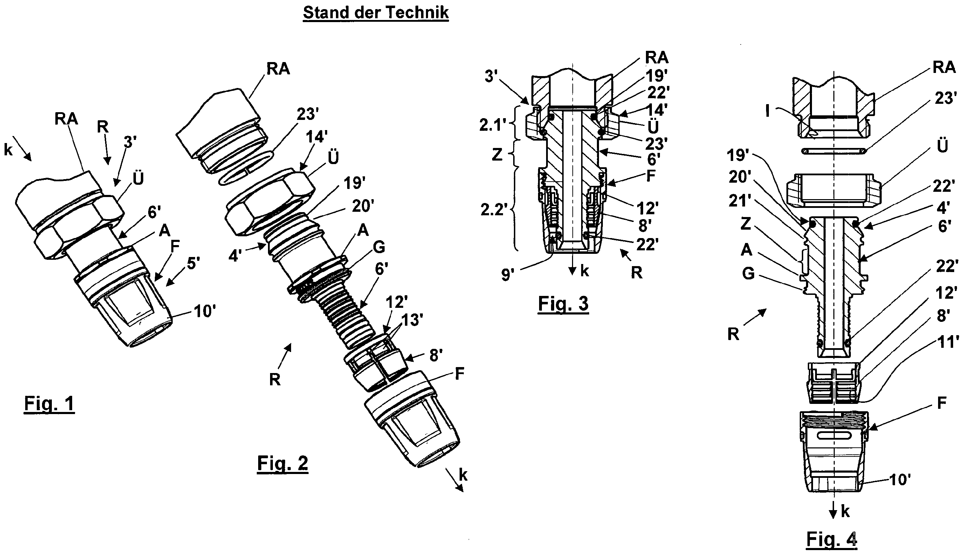

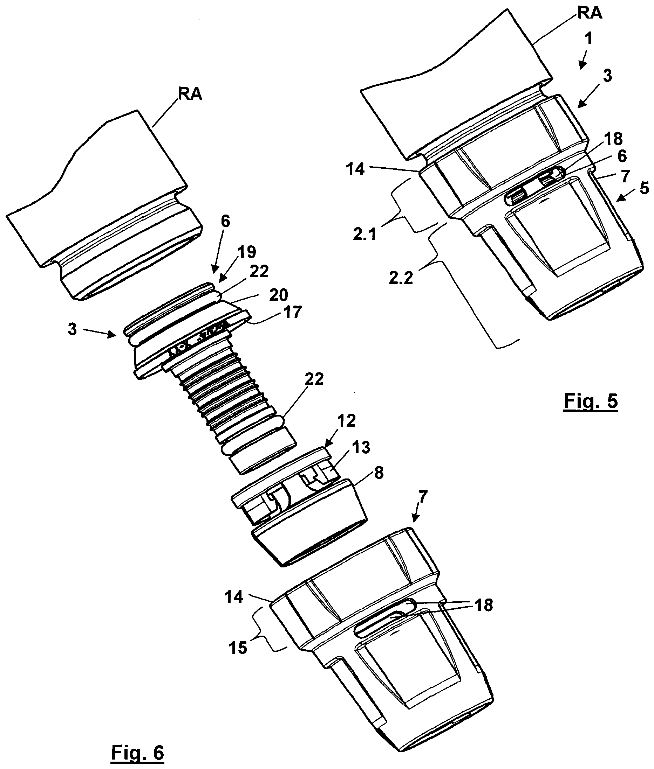

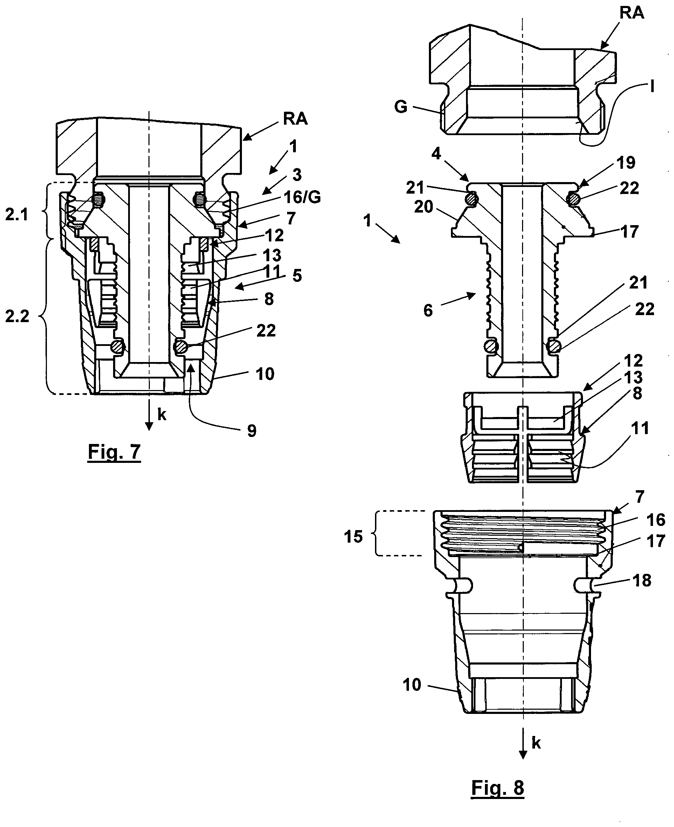

In den Figuren 1 bis 4 wird ein üblicher Rohrverbinder R und in den Figuren 5 bis 8 ein erfindungsgemäßer Rohrverbinder 1 jeweils in verschiedenen Ansichten und Darstellungsweisen gezeigt. In allen Figuren ist zusätzlich ein Rohranschluss RA angezeigt, der in den Rohrverbinder R, 1 eingreift. Zur Unterscheidung des erfindungemäßen Rohrverbinders 1 von dem üblichen Rohrverbinders R sind die Bezugszeichen von Bauteilen des üblichen Rohrverbinders R, die gleich wirkend zu denen des erfindungsgemäßen Rohrverbinders 1 sind, zusätzlich jeweils mit einem hochgestellten Strich gekennzeichnet.

Beide Rohrverbinder 1, R weisen zwei Anschlussendbereiche, einen ersten Anschlussendbereich 2.1, 2.1' mit einem hier als Eurokonusanschluss 3, 3' ausgebildeten Anschlussstutzen 4, 4' zum Anschluss an den Rohranschluss RA und einen zweiten Anschlussendbereich 2.2, 2.2' auf, der als Steckverbinder 5, 5' für ein hier nicht dargestelltes Rohrleitungsende ausgebildet ist. Der zweite Anschlussendbereich 2.2, 2.2' weist einen Stützkörper 6, 6', und ein zwischen einem Fixierteil 7, F und Stützkörper 6, 6' angeordnetes Klemmelement 8, 8' auf. Stützkörper 6, 6' und Klemmelement 8, 8' definieren und begrenzen einen Aufnahmeraum 9, 9' für das Rohrleitungsende. Das Klemmelement 8, 8' ist relativ zum Fixierteil 7, F in einer Klemmrichtung k zu einem von dem ersten Anschlussendbereich 2.1, 2.1' weg weisenden freien Ende 10, 10' des Fixierteile 7, F hin axial bewegbar. Infolge dieser Bewegung ist ein radial nach innen weisender Wandbereich 11, 11' des Klemmelemente 8, 8' keilartig gegen die Außenseite des Rohrleitungsendes pressbar, wodurch dieselbe in Klemmrichtung k gehalten wird und gegen Klemmrichtung k wieder lösbar ist. Das Klemmelementes 8, 8' ist axial in Klemmrichtung k vorn einstückig mit einem Krallelement 12, 12' verbunden, das radial innen eine Kralle 13, 13' zum Eingriff in oder Anpressen an die Außenseite des Rohrleitungsendes aufweist. Der Aufbau eines Steckverbinders und das Zusammenspiel der einzelnen Bauteile desselben beim Anschluss des Rohrleitungsendes sind in der EP 2 129 955 A2 ausführlich beschrieben, auf die ausdrücklich verwiesen wird.

Bei dem üblichen Rohrverbinder R gemäß den Figuren 1 bis 4 ist zur Lagefixierung des Rohrverbinders R an dem Rohranschluss RA als Schraubelement 14' eine Überwurfmutter Ü vorgesehen, die gegen Klemmrichtung l an einem umfänglichen Vorsprung v gehalten ist und, unverbunden mit dem Rohranschluss RA, axial in Klemmrichtung k über einem axialen Zwischenbereich Z beweglich an dem Stützkörper 6' gehalten ist. Das Fixierteil F ist in dem zweiten Anschlussendbereich 2,2' mit dem Stützkörper 6' gegen einen Anschlag A hin verschraubt.

Hiervon unterscheidet sich der erfindungsgemäße Rohrverbinder 1 gemäß den Figuren 5 bis 8 grundlegend, denn dieser weist ein Fixierteil 7 auf, das in der Verbindungsposition zum Gewindeeingriff in das am Rohranschluss RA vorgesehendes Außengewinde A gegen Klemmrichtung k axial vorsteht und mit einem Endbereich 15 in den ersten Anschlussendbereich 2.1 hineinragt. Der Endbereich 15 ist endseitig zu dem Schraubelement 14 mit einem Innengewinde 16 ausgebildet, so dass die beim Stand der Technik vorgesehene Überwurfmutter Ü (Fig.1) überflüssig wird.

Wie auch insbesondere den Explosionsdarstellungen der Figuren 2 und 4 leicht entnehmbar ist, wird zur Vereinfachung der Montage, das Fixierteil 7 gegen Klemmrichtung k auf den Stützkörper 6 aufgezogen und unmittelbar mittels seines Innengewindes 16 mit dem Außengewinde A des Rohranschlusses RA verschraubt. Zur Gegenlagerung bzw. zur axialen Wegbegrenzung des Fixierteiles 7 weist der Stützkörper 6 einen Anschlag 17, gegen den das Fixierteil 7 in Klemmrichtung k endseitig seines Innengewindes 16 anschlägt. Der Anschlag 17 bildet zugleich den Übergang zwischen den aneinander angrenzenden Anschlussendbereichen 2.1, 2.2. Damit entfallen bei dem hier dargestellten erfindungsgemäßen Rohrverbinder 1 beim üblichen Rohrverbinder R gemäß Figur 4 notwendige axiale Abschnitte des Stützkörpers 7', d.h. Außengewinde G, Anschlag A und Zwischenbereich Z für die Überwurfmutter Ü, wodurch die axiale Länge der hier gezeigten Ausführungsform des erfindungsgemäßen Rohrverbinders 1 gegenüber der des üblichen Rohrverbinders R gemäß den Figuren 1 bis 4 um bis zu 30 - 50 Prozent deutlich verringert ist.

Das Fixierteil 7 ist hier als einstückige Schraubhülse ausgebildet. Damit besteht der erfindungsgemäße Rohrverbinder 1 im Prinzip lediglich aus drei Bauteilen, dem Stützkörper 6, dem Fixierteil 7 und dem Klemmelement 8 mit dem Krallelement 13. Diese sind als Spritzgussteile aus Polyphenylsulfon (PPSU) hergestellt. Da das Fixierteil 7 in der Verbindungsposition unmittelbar mit dem Rohranschluss RA verschraubt ist, schützt sie in der Verbindungsposition zugleich den Rohrverbinder 1 nach Außen hin. Ferner kann sie als bequemer Handgriff zur Positionierung und Verschraubung des Rohrverbinders 1 an bzw. mit dem Rohranschluss RA dienen oder kann ferner in weniger zugänglichen Arbeitsbereichen zum Einleiten eines axialen Drehmomentes leichter von einem Werkzeug erreicht werden. Das Fixierteil 7 weist Überwachungsfenster 18 zu dem Aufnahmeraum 9 hin auf, durch die ein ordnungsgemäßes vollständiges Einschieben des Rohrleitungsendes in den Aufnahmeraum 9 hinein kontrolliert werden kann.

Der Eurokonusanschluss 3 weist gegen Klemmrichtung k hinten eine zylindrische Aufnahme 19, 19' für den Rohranschluss RA und einen in Klemmrichtung k angrenzenden Außenkonus 20, 20' auf. Der Außenkonus 20, 20' liegt in der Verbindungsposition gegen einen Innenkonus I des Rohranschlusses RA an. Dies erfolgt bei dem erfindungsgemäßen Rohrverbinder 1 in Gegenlagerung zu dem Fixierteil 7, das unter Schraubpressung Kraft übertragend gegen den an dem Stützkörper 6 angeordneten Anschlag 17 anliegt. Damit wird der Stützkörper 6 axial verschiebungsfest gegen den Rohranschluss RA gehalten.

Es sind zur Abdichtung des Stützkörpers 6, 6' in umfängliche Ringnuten 21, 21' eingelegte O-Ringe 22, 22' vorgesehen, wobei die Ringsnuten 21, 21' beidendseitig an dem Stützkörper 6, 6' angeordnet sind: Im ersten Anschlussendbereich 2.1, 2.1' wird der Stützkörper 6, 6' im Bereich der zylindrischen Aufnahme 19, 19' gegen den Rohranschluss RA abgedichtet; im zweiten Endbereich 2.2, 2.2' wird der Stützkörper 6, 6' in Klemmrichtung gegen das Rohrleitungsende abgedichtet.

Zur Sicherung der Überwurfmutter Ü ist im Stand der Technik gemäß den Figuren 1 - 4 ein Sprengring 23' vorgesehen. Dieser Sprengring entfällt bei dem erfindungsgemäßen Gegenstand gemäß den Figuren 5 - 8, da die Fixierhülse 7 gegen Klemmrichtung k aufgezogen und zu ihrer Sicherung gegen ein Loslösen gegen Klemmrichtung k gegen den am Stützkörper 6 vorgesehenen Anschlag 17 geführt wird.

### Bezugszeichenliste

- 1: Rohrverbinder
- 2.1, 2.1': erster Anschlussendbereich
- 2.2, 2.2': zweiter Anschlussendbereich
- 3, 3': Eurokonusanschluss
- 4, 4': Anschlussstutzen
- 5, 5': Steckverbinder
- 6, 6': Stützkörper
- 7: Fixierteil
- 8, 8': Klemmelement
- 9, 9': Aufnahmeraum
- 10, 10': Ende
- 11, 11': Wandbereich
- 12, 12': Krallelement
- 13, 13': Kralle
- 14, 14': Schraubelement
- 15: Endbereich
- 16: Innengewinde
- 17: Anschlag
- 18: Überwachungsfenster
- 19, 19': Aufnahme
- 20, 20': Außenkonus
- 21, 21': Ringnut
- 22, 22': O-Ring
- 23': Sprengring
- k: Klemmrichtung
- A: Anschlag
- F: Fixierteil
- G: Außengewinde
- I: Innenkonus
- R: Rohrverbinder
- RA: Rohranschluss
- Ü: Überwurfmutter
- Z: Zwischenbereich

## Patentansprüche

1. Rohrverbinder (1) mit zwei Anschlussendbereichen, das heißt einem ersten Anschlussendbereich (2.1) mit einem Anschlussstutzen (4), der mittels eines Schraubelementes (14) in einer Schraubverbindung an einem Rohranschluss (RA), Verteiler oder dergleichen festlegbar ist, und einem zweiten Anschlussendbereich (2.2), wobei der Rohrverbinder (1) ein einstückig ausgebildetes Fixierteil (7) zur Befestigung eines Rohrleitungsendes umfasst und wobei der zweite Anschlussendbereich (2.2) einen Stützkörper (6) und ein radial zwischen Fixierteil (7) und Stützkörper (6) angeordnetes Klemmelement (8) aufweist, das relativ zum Fixierteil (7) in einer Klemmrichtung (k) zu einem von dem ersten Anschlussendbereich (2.1) weg weisenden freien Ende (10) des Fixierteils (7) hin axial bewegbar ist und infolge dieser Bewegung ein radial nach innen weisender Wandbereich des Klemmelementes (8) gegen die Außenseite des Rohrleitungsendes pressbar ist, wobei das Fixierteil (7) gegen Klemmrichtung über den Stützkörper (6) aufschiebbar ist, wobei an dem Stützkörper ein Anschlag vorgesehen ist, gegen den das Fixierteil mit einem entsprechenden Anschlag gegen Klemmrichtung in eine Verbindungsposition hinein axial führbar ist, wobei das Fixierteil in der Verbindungsposition mit einem Endbereich (15) in den ersten Anschlussendbereich (2.1) hineinragt, wobei der Endbereich (15) das Schraubelement (14) aufweist oder als dasselbe ausgebildet ist und wobei in der Verbindungsposition das Fixierteil mit seinem Endbereich (15) zum Gewindeeingriff in ein am Rohranschluss (RA), Verteiler oder dergleichen vorgesehenes Gewinde gegen Klemmrichtung vorsteht und der Rohrverbinder mit dem Anschlussstutzen (4) an dem Rohranschluss (RA), Verteiler oder dergleichen axial anlegbar und mit Aufschrauben des Fixierteils (7) an demselben festlegbar und hierbei der Stützkörper (6) zwischen demselben und dem Anschlag des Fixierteils (7) einklemmbar ist, wobei der zweite Anschlussendbereich als Steckverbinder ausgebildet ist, in den nach dem Festlegen des Rohrverbinders an dem Rohranschluss (RA), Verteiler oder dergleichen das Rohrleitungsende einsteckbar ist, wobei in Klemmrichtung (k) axial vor dem Klemmelement (8) ein Krallelement (12) vorgesehen ist, das radial innen eine Kralle (13) zum Eingriff in oder Anpressen an die Außenseite des Rohrleitungsendes aufweist und das einstückig mit dem Klemmelement (8) verbunden ist, wobei das Fixierteil (7), der Stützkörper (6), das Klemmelement (8) und das Krallelement (12) aus Kunststoff hergestellt sind.

2. Rohrverbinder (1) nach Anspruch 1, **dadurch gekennzeichnet, dass** der Endbereich (15) des Fixierteiles (7) ein Innengewinde (16) zum Gewindeeingriff an Rohranschluss (RA), Verteiler oder dergleichen aufweist.

3. Rohrverbinder (1) nach einem der Ansprüche 1 oder 2, **dadurch gekennzeichnet, dass** der Endbereich (15) des Fixierteiles (7) überwurfmutterartig ausgebildet ist.

4. Rohrverbinder (1) nach einem der Ansprüche 1 bis 3, **dadurch gekennzeichnet, dass** das Fixierteil (7) hülsenartig ausgebildet ist.

5. Rohrverbinder (1) nach einem der Ansprüche 1 bis 4, **dadurch gekennzeichnet, dass** der Anschlag zwischen den Anschlussendbereichen (2.1, 2.2) an dem Stützkörper (6) angeordnet ist.

6. Rohrverbinder (1) nach einem der Ansprüche 1 bis 5, **dadurch gekennzeichnet, dass** seine beiden Anschlussendbereiche (2.1, 2.2) unmittelbar aneinander angrenzen.

7. Rohrverbinder (1) nach einem der Ansprüche 1 bis 6, **dadurch gekennzeichnet, dass** in beiden Anschlussendbereichen (2.1, 2.2) jeweils ein Dichtungselement zur Abdichtung des jeweils vorgesehenen Rohranschlusses (RA), Verteilers oder dergleichen bzw. des Rohrleitungsendes gegen den Stützkörper (6) vorgesehen ist.

8. Rohrverbinder (1) nach Anspruch 7, **dadurch gekennzeichnet, dass** das Dichtungselement als O-Ring (22) ausgebildet ist, der beidendseitig am Stützkörper (6) jeweils in einer radial nach außen geöffneten Ringnut (21) angeordnet ist.

9. Rohrverbinder (1) nach einem der Ansprüche 1 bis 8, **dadurch gekennzeichnet, dass** der Anschlussstutzen als Konusanschluss, insbesondere als Eurokonusanschluss (3), oder als Flachdichtungsanschluss ausgebildet ist.

## Claims

1. Pipe connector (1) with two connection end sections, i.e. a first connection end section (2.1) having a connecting piece (4) fixable in a screw connection to a pipe fitting (RA), a manifold or the like by means of a screw element (14), and a second connection end section (2.2), wherein the pipe connector (1) comprises an integrally formed fixing member (7) for fixing a pipe end, and wherein the second connection end section (2.2) has a supporting body (6) and a clamping element (8) radially disposed between said fixing member (7) and said supporting body (6) and axially movable relative to the fixing member (7) in a clamping direction (k) towards a free end (10) of the fixing member (7) facing away from the first connection end section (2.1), and a radially inwardly facing wall portion of the clamping element (8) being able to be pressed against the outside of the pipe end as a result of this movement, wherein the fixing member (7) can be sleeved over the supporting body (6) against the clamping direction, wherein a stopper is provided on the supporting body against which the fixing member having a corresponding stopper can be axially guided into a connection position against the clamping direction, wherein the fixing member in the connection position protrudes with an end portion (15) thereof into the first connection end section (2.1), wherein the end portion (15) has the screw element (14) or is formed as the same, and wherein in the connection position said fixing member protrudes with its end portion (15) against the clamping direction, for the threaded engagement with a thread provided on the pipe fitting (RA), the manifold or the like, and wherein the pipe connector with the connecting piece (4) can be axially applied against the pipe fitting (RA), the manifold or the like and fixed thereto by screwing on the fixing member (7) while enabling the supporting body (6) to be clamped between the same and the stopper of the fixing element (7), wherein the second connection end section is formed as a plug connector in which the pipe end can be plug-fitted after fixing the pipe connector to the pipe fitting (RA), the manifold or the like, wherein a claw element (12) is provided axially upstream of the clamping element (8) in the clamping direction (k) and is radially inwardly provided with a claw (13) for engaging or being pressed against the outside of the pipe end and is integrally connected to the clamping element (8), wherein the fixing member (7), the supporting body (6), the clamping element (8) and the claw element (12) are made of plastic.

2. Pipe connector (1) according to claim 1, **characterized in that** the end portion (15) of the fixing member (7) has an internal thread (16) for the threaded engagement with the pipe fitting (RA), the manifold or the like.

3. Pipe connector (1) according to one of the claims 1 or 2, **characterized in that** the end portion (15) of the fixing member (7) is formed as formed as a cap nut.

4. Pipe connector (1) according to one of the claims 1 to 3, **characterized in that** the fixing member (7) is formed in a sleeve-like manner.

5. Pipe connector (1) according to one of the claims 1 to 4, **characterized in that** the stopper is disposed between the connection end sections (2.1, 2.2) on the supporting body (6).

6. Pipe connector (1) according to one of the claims 1 to 5, **characterized in that** both of its connection end sections (2.1, 2.2) are directly adjacent each other.

7. Pipe connector (1) according to one of the claims 1 to 6, **characterized in that** in both connection end sections (2.1, 2.2) a respective sealing element is provided for sealing the respective pipe fitting (RA), manifold or the like or the pipe end against the supporting body (6).

8. Pipe connector (1) according to claim 7, **characterized in that** the sealing element is formed as an O-ring (22) respectively arranged on the supporting body (6) on both sides thereof in an annular groove (21) open radially towards the outside.

9. Pipe connector (1) according to one of the claims 1 to 8, **characterized in that** the connecting piece is formed as a cone connector, especially a Eurocone connector (3), or a flat seal connector.

## Revendications

1. Raccord de tuyau (1), comprenant deux parties terminales de raccordement, c'est à dire une première partie terminale de raccordement (2.1) munie d'un manchon de raccordement (4) pouvant être fixé par vissage sur un raccord tubulaire (RA), distributeur ou analogue au moyen d'un élément de vissage (14), et une deuxième partie terminale de raccordement (2.2), le raccord de tuyau (1) comprenant une pièce de fixation (7) réalisée d'un seul tenant est destinée à fixer une extrémité de conduit, la deuxième partie terminale de raccordement (2.2) comportant un corps de support (6) et un élément de serrage (8) disposés radialement entre la pièce de fixation (7) et le corps de support (6) et mobile axialement par rapport à la pièce de fixation (7) dans une direction de serrage (k) vers une extrémité libre (10) de la pièce de fixation (7) orientée à l'opposé de la première partie terminale de raccordement (2.1), en conséquence de ce mouvement une partie de paroi de l'élément de serrage (8) orientée radialement vers l'intérieur pouvant être pressée contre la face extérieure de l'extrémité de conduit, la pièce de fixation (7) pouvant être poussée sur le corps de support (6) contre la direction de serrage, une butée étant prévue sur le corps de support contre laquelle la pièce de fixation avec une butée correspondante peut être axialement guidé contre la direction de serrage dans une position de liaison, la pièce de fixation, dans la position de liaison, pénétrant avec une partie terminale (15) dans la première partie terminale de raccordement (2.1), ladite partie terminale (15) présentant l'élément de vissage (14) ou étant réalisée comme celui-ci, et la pièce de fixation, dans la position de liaison, faisant saillie avec sa partie terminale (15) contre la direction de serrage pour l'engagement fileté dans un filet prévu sur le raccord tubulaire (RA), distributeur ou analogue, et le raccord de tuyau avec le manchon de raccordement (4) pouvant être appliqué contre ledit raccord tubulaire (RA), distributeur ou analogue et fixé sur celui-ci par vissage de la pièce de fixation (7) en serrant le corps de support (6) entre celui-ci et la butée de la pièce de fixation (7), la deuxième partie terminale de raccordement étant réalisée comme connecteur dans lequel peut être enfiché l'extrémité de conduit après la fixation du raccord de tuyau sur le raccord tubulaire (RA), distributeur ou analogue, un élément de crampon (12) étant prévu axialement devant l'élément de serrage (8) dans la direction de serrage (k) et étant muni radialement à l'intérieur d'un crampon (13) pour s'engager dans ou étant mis en appui contre la face extérieure de l'extrémité de conduit et étant relié d'un seul tenant à l'élément de serrage (8), la pièce de fixation (7), le corps de support (6), l'élément de serrage (8) et l'élément de crampon (12) étant réalisés en matière plastique.

2. Raccord de tuyau (1) selon la revendication 1, **caractérisé en ce que** la partie terminale (15) de la pièce de fixation (7) présente un filetage intérieur (16) pour l'engagement fileté sur le raccord tubulaire (RA), distributeur ou analogue.

3. Raccord de tuyau (1) selon l'une des revendications 1 ou 2, **caractérisé en ce que** la partie terminale (15) de la pièce de fixation (7) est réalisée du type écrou-raccord.

4. Raccord de tuyau (1) selon l'une quelconque des revendications 1 à 3, **caractérisé en ce que** la pièce de fixation (7) est réalisée du type manchon.

5. Raccord de tuyau (1) selon l'une quelconque des revendications 1 à 4, **caractérisé en ce que** la butée est disposée entre les parties terminales de raccordement (2.1, 2.2) sur le corps de support (6).

6. Raccord de tuyau (1) selon l'une quelconque des revendications 1 à 5, **caractérisé en ce que** ses deux parties terminales de raccordement (2.1, 2.2) sont directement adjacentes l'une à l'autre.

7. Raccord de tuyau (1) selon l'une quelconque des revendications 1 à 6, **caractérisé en ce que** dans les deux parties terminales de raccordement (2.1, 2.2) est respectivement prévu un élément d'étanchéité pour rendre étanche le raccord tubulaire (RA), distributeur ou analogue respectivement prévus ou l'extrémité de conduit par rapport au corps de support (6).

8. Raccord de tuyau (1) selon la revendication 7, **caractérisé en ce que** l'élément d'étanchéité est réalisé comme joint torique (22) disposé des deux côtés du corps de support (6) respectivement dans une rainure annulaire (21) ouverte vers l'extérieur.

9. Raccord de tuyau (1) selon l'une quelconque des revendications 1 à 5, **caractérisé en ce que** le manchon de raccordement est réalisé du type raccordement conique, en particulier du type Eurocône (3), ou du type joint plat.
